Europäisches Patentamt

European Patent Office

Office européen des brevets

(11) Publication number: **0 333 261**
A2

# EUROPEAN PATENT APPLICATION

(21) Application number: 89200598.4

(22) Date of filing: 09.03.89

(51) Int. Cl.⁴: **H01M 8/12 , H01M 8/06 , H01M 8/00 , C25B 5/00**

(30) Priority: 14.03.88 IT 1976288

(43) Date of publication of application:
20.09.89 Bulletin 89/38

(84) Designated Contracting States:
DE FR GB GR IT NL SE

(71) Applicant: Costa, Bruno
Via Petrarca 31 C/11
Napoli(IT)

(72) Inventor: Costa, Bruno
Via Petrarca 31 C/11
Napoli(IT)

(74) Representative: Raimondi, Alfredo, Dott. Ing.
Prof. et al
Studio Tecnico Consulenza Brevetti Piazzale
Cadorna 15
I-20123 Milano(IT)

(54) Method and plant for the production of electrical energy and gas for chemical syntheses by means of oxidation in molten metal baths.

(57) A method and plant for the production of electrical energy and gas for chemical syntheses including several successive steps comprising a step in which a fuel containing carbon is supplied to a metal in the molten state, called the carburation stage, a step in which the impurities added by the fuel to the molten metal bath are removed, called the desulphurization stage, a step in which the molten metal bath is heated, a step in which the fuel is converted electrochemically into electrical energy and gas with a medium calorific value, by means of a solid electrolyte, and steps in which the electrical energy and gas produced are used.

Fig. 1

# METHOD AND PLANT FOR THE PRODUCTION OF ELECTRICAL ENERGY AND GAS FOR CHEMICAL SYNTHESES BY MEANS OF OXIDATION IN MOLTEN METAL BATHS

The present invention relates to a method and plant for the direct production of electrical energy and fuel gas with a medium calorific value by means of oxidation in a molten metal bath.

Processes are known from the prior art for the direct conversion of energy by electrochemical methods; the plant in which the conversion takes place, which may have powers ranging from some hundreds of kW up to approximately 100 MW, are called fuel cells.

The fuel gas oxidation reaction is carried out in these cells by various methods; the gas is usually hydrogen or carbon monoxide which is supplied continuously to the cell with an oxidant formed by oxygen from air which is also supplied continuously; these cells provide the conditions under which the oxidation energy is generated in the form of d.c. electrical energy.

Known fuel cells include those cells formed by cells containing solid electrolytes formed by metal oxides with a high ion conductance at high temperature (800-1000° C), for instance oxides of Zr, Y, Yb, Th, Ca, Mg and others.

The reaction products of known fuel cells are $H_2O$ and $CO_2$.

The known methods are not, however, adapted to the production of electrical energy on a large scale and also use gaseous fuels which are expensive, whereas it would be particularly advantageous to produce energy with low-cost solid fuels without having to subject these fuels in advance to costly gasification and purification treatments.

A further requirement lies in the possibility of obtaining as a product of the chemical energy generation reactions substances which can be used for chemical syntheses or as fuel, making it possible in this way fully to exploit the energy content of the substances used as fuel.

The object of the present invention is therefore to provide a method which allows the direct production of electrical energy by chemical methods from solid fuels which is economically advantageous and also allows the substances produced from the energy generation reaction to be used as raw materials for subsequent industrial processes.

A further object of the present invention is to provide a plant which allows the method of the invention to be carried out on an industrial scale.

These results are achieved by the present invention which provides a method for the generation of electrical energy and gas for chemical syntheses which includes several successive steps comprising a step in which a fuel containing carbon is supplied to a metal in the molten state, called the carburation stage, a step in which the impurities added to the molten metal bath by the fuel are removed, called the desulphurization stage, a step in which the molten metal bath is heated, a step in which the fuel is converted electrochemically into electrical energy and gas with a medium calorific value, by means of a solid electrolyte, and steps in which the electrical energy and gas generated are used.

The bath of molten metal is constituted by iron containing carbon in solution.

The material with solid elecrolyte properties is consituted by refractory oxides such as $ZrO_2$, $ThO_2$, $HfO_2$, $CaO$, $MgO$, $Y_2O_3$, $Yb_2O_3$ and the like whether pure or in combination, either as mixed oxides or impurities, and is preferably formed predominantly by $ZrO_2$.

The solid fuel containing carbon supplied to the bath is formed by fossil coal in small pieces or crushed and inert gas, preferably carbon monoxide, is used as the carrier fluid.

Air is supplied through the thin wall of material with solid electrolyte properties, although oxygene alone in ion form can be passed at will through this wall.

The process is thermally self-contained; oxygen is supplied to the molten metal bath to generate heat by combustion of the excess carbon dissolved in the bath, this heat being adapted to maintain the operating temperature thereby offsetting the dispersion of the system.

The supply or carburation step and the desulphurization step are carried out in two or more adjacent reactors through which a stream of the molten metal bath passes, fuel containing carbon being supplied to the first of these reactors in the direction of flow of the bath and desulphurizing materials being supplied to the second of these reactors, the impurities, chiefly composed of sulphur and ash, contained in the fuel collecting in a slag floating on the surface of the bath counter to the direction of the bath and being discharged externally to the carburation reactor.

The fuel is a solid broken into fine pieces with an average size of between 0.1 and 3 mm with a rate of flow and speed of supply in relation to the rate of flow and speed of the molten metal bath which causes the fuel to dissolve in the bath during the passage of the fuel particles into the molten metal.

The bath of molten metal has, on input into the first stage a quantity of residual carbon of no less than 0.6%.

Fluidizing substances, including lime and calcium fluoride, are supplied together with the solid fuel in the carburation stage to form a slag which is continuously removed from the reactor in which this first method step takes place.

The desulphurization stage comprises several successive steps during which various desulphurizing substances are supplied, the most efficient of these substances being supplied during the final steps.

The stage of heating of the molten metal bath comprises the division of the bath into two streams, one of which, is subjected to oxidation by jets of oxygene of the fuel contained therein before rejoining the other stream.

The method of the invention may be isothermic, wherein an amount of heat equivalent to the heat dispersions is supplied during the stage of heating of the bath, or non-isothermic, wherein an amount of heat greater than that formed by the heat dispersions is supplied during the stage of heating of the bath, causing a cooling of the bath during the conversion stage.

A plant for the implementation of the method comprises a carburation reactor and one or more desulphurization reactors disposed adjacent to one another in succession, having upper zones containing the gases separated and communicating with one another through their lower zones through which a molten metal bath stream passes, which reactors are provided with nozzles for the supply of fuel and slag-forming and desulphurizing agents, means for moving the molten metal bath through the reactors and means for moving the slag on the bath surface in the opposite direction being provided.

Means for moving the molten metal bath being constituted by electro-magnetic linear motors and means for moving slag counter-current being consituted by sloping the reactors opposite to the direction of flow of the molten metal bath, by jets of gas or the like.

The heating stage is carried out in a reactor in which the fraction of the molten metal bath to be subjected to oxidation is brought by associating lifting means, such as electromagnetic pumps or the like, to a level which is higher than the remainder of the bath flowing through the reactor and rejoins the remainder by free fall remote from the walls of the reactor, means being provided for the emission of jets of oxygen symmetrically disposed about the falling bath column and adapted to oxidize the fuel in the bath, the reactor having a zone for the collection of the gases generated by the oxidation and means for the removal thereof.

The conversion stage is carried out in one or more reactors disposed downstream of the heating stage through which the molten metal bath stream passes, comprising one or more cells each comprising an oxidizing gas inlet member having porous walls which are gas permeable, comprising a layer of material with solid electrolyte properties in contact with the molten metal bath, a conductor of electronic type being placed in contact with the layer of solid electrolyte on the side opposite to the metal bath and forming the cathode of the cell, each cell also being provided with a second conductor of electronic type in contact with the metal bath and facing towards the layer of solid electrolyte and forming the anode of the cell, the anode and cathode of the cell(s) being connected to an external consumer circuit, means for the continuous admission and discharge of the molten metal bath and means for the separation and emission of the reaction gas being provided.

Several elementary cells are connected together in parallel, forming a bank of cells; several banks of cells are advantageously provided, the cells of one bank being respectively connected in series with the cells of an adjacent bank of cells, wherein the banks are transversed by separate streams of the molten metal bath, the cathodes of the cells of the bank at one end of the reactor and the anodes of the cells of the bank at the opposite end being respectively connected to an external electrical consumer circuit.

The gas produced during the conversion stage is carbon monoxide and the gas produced may be used in a process, using this gas to generate electrical power, of a thermoelectric or magnetohydrodynamic type with gas fuel cells or similar known processes, or a chemical synthesis process.

The stage of use of the electrical energy produced is a water electrolysis process designed to generate hydrogen which is supplied to the chemical synthesis process together with the carbon monoxide produced during the conversion stage.

The stage of use of the carbon monoxide produced in the conversion stage may take the form of a "water shift reaction":

$$CO + H_2O \rightarrow CO_2 + H_2$$

designed to produce hydrogen and carbon dioxide, the hydrogen being designed to be supplied to the chemical synthesis process together with the carbon monoxide produced during the conversion stage.

Further details are set out in the following description made with reference to the attached drawings, in which:

Fig. 1 is a general diagram of the method of the invention;

Fig. 2 is a diagrammatic longitudinal section through a system of reactors carrying out the first and second steps of the process, i.e. carburation and desulphurization;

Fig 3 is a cross-section through the reactor of Fig. 2 along the line III-III;

Fig. 4 is a section along the line IV-IV of Fig. 2;

Fig. 5 is a diagrammatic longitudinal section of a reactor carrying out the third step of the method, i.e. the heating step;

Fig 6 is a diagram of a reactor carrying out the fourth step of the method, or conversion step, in cross-section along the line VI-VI of Fig.7;

Fig. 7 shows the reactor carrying out the conversion step in cross-section along the line VII-VII of Fig. 6;

Fig. 8 is a cross-sectional detail of a cathode portion of a cell of the reactor of Fig.6;

Fig. 9 is a general diagram of a method of the invention comprising the steps during which the gases and energy produced in the conversion step are used.

According to the invention, a new fuel cell is provided in which the oxidant is oxygen from air, use is made of a solid electrolyte to carry the oxygen ions and the fuel is formed by carbon dissolved in a bath of molten metal, specifically iron.

A gas formed by CO is obtained in this case as a reaction product in accordance with the reaction:

$$C + 1/2 \, O_2 \rightarrow CO_{(g)} \qquad (1)$$

A characteristic feature of this cell is the simultaneous production of electrical current and gas.

The electrical energy is available in an electrical consumer circuit whose positive pole (cathode) is connected to the surface of the solid electrolyte wall which is not in contact with the iron and in which the negative pole (anode) is a conductor of electronic type in contact with the metal bath. The gas is generated at a temperature of 1550-1700°C and is collected in suitable ducts.

This conversion process is particularly advantageous as a result of the absence of pollutant products, the high conversion efficiency and the high power available by both unit of area and unit of volume.

The field of application of this method includes industrial electricity generation plant (power stations with outputs of 100 to 1000 MW) and large gas generation units with a capacity similar to that of coal gasification plants.

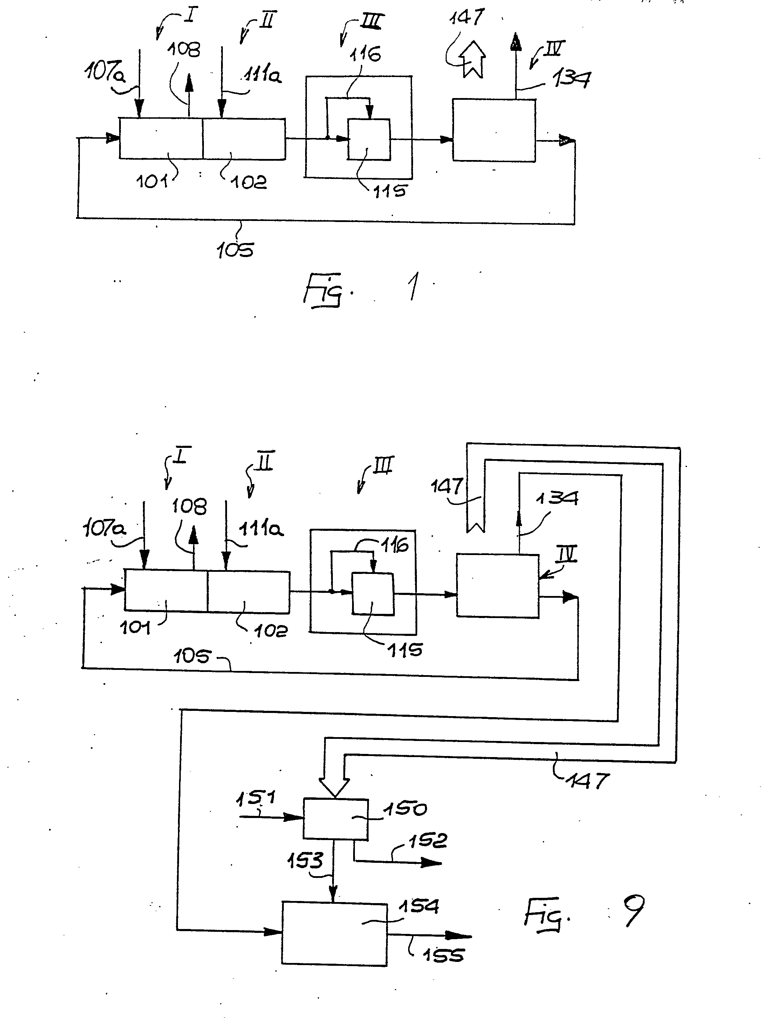

In a more complete form, as shown in Fig. 1, a plant is provided which is supplied with solid fuel (usually fossil coal although oil distillation and carbon liquefaction residues or other materials containing carbon can be used as an alternative) comprising a first method step (I) in which the carbon contained in the solid fuel is dissolved in the molten metal (iron); a second method step (II) in which the sulphur, contained in the solid fuel in variable percentages up to a value of 7 to 8%, is removed by a so-called desulphurization process; a third step (III), or heating stage, in which the bath of molten metal and fuel is brought to the reaction temperature and a fourth step (IV) in which electrical energy and carbon monoxide are finally generated in a fuel cell.

In step (I) the carbon contained in the solid fuel is dissolved in the molten metal by a supply device which blows the fuel in powder or particle form carried by a gas, preferably carbon monoxide, into the liquid metal; at this stage of the method gases are released from the volatile raw materials contained in the fossil coal simultaneously with the elimination of ash which is combined with added fluidizing substances, preferably lime and calcium fluoride, to form a slag which is continuously removed from the reactor in which this first method step is carried out.

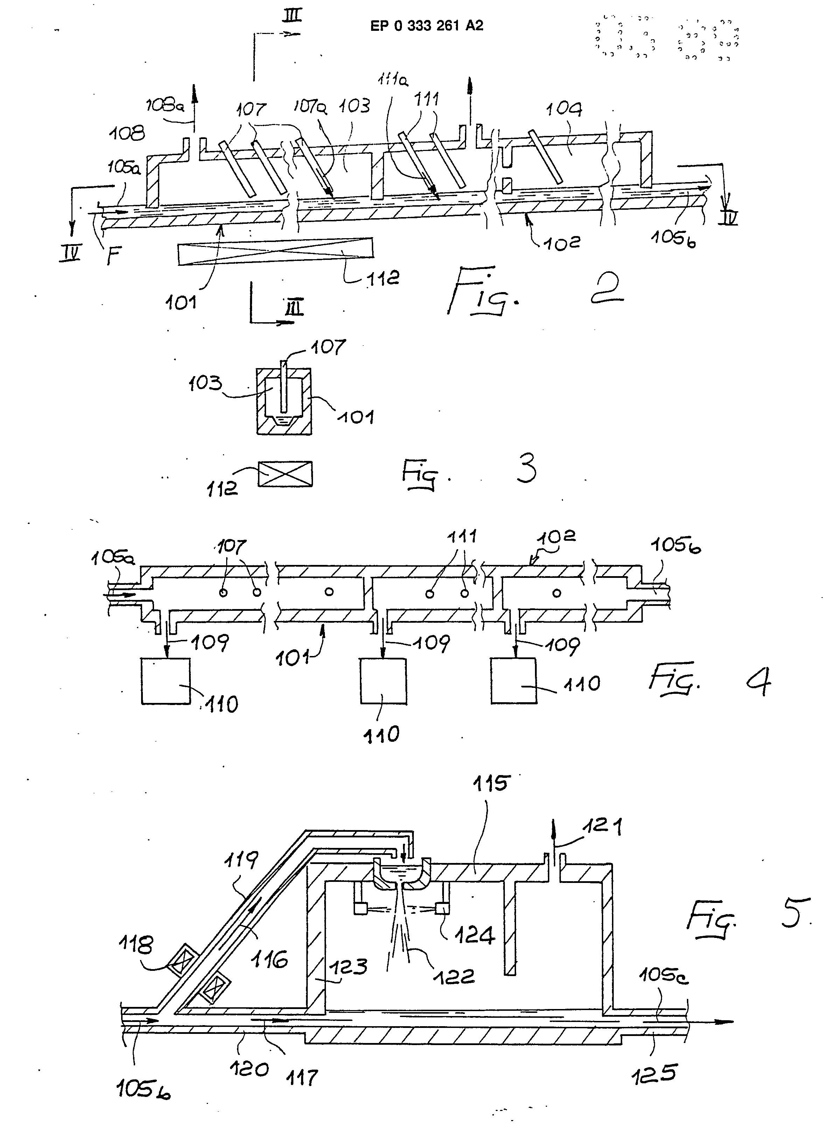

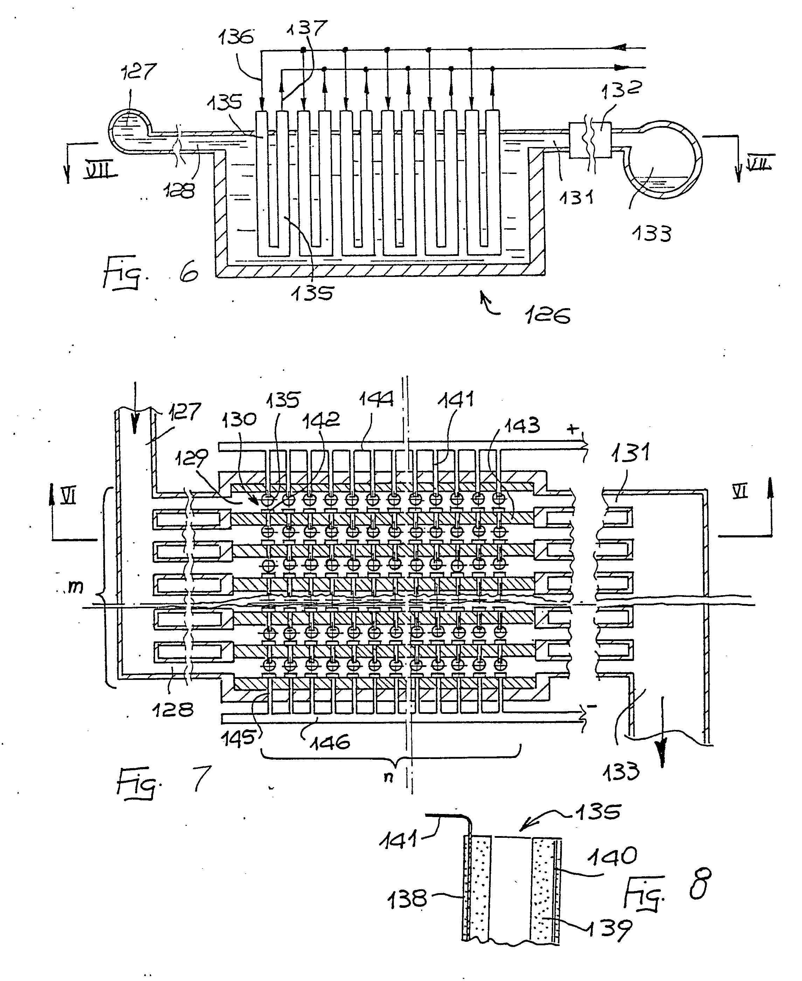

Figs. 2, 3 and 4 show steps (I) and (II) of the method in diagrammatic form; during these steps the carburation reactor 101 and desulphurization reactor 102 are disposed such that only their respective upper zones 103 and 104 containing the gases are separated; the input stream of iron 105a, with a quantity of residual carbon of some 0.6% and at a temperature of 1500-1600°C, is introduced under the action of an electromagnetic pump or the like (not shown) into a channel 106 lined with consumable refractory material and passes through the reactors in the direction of the arrow F; a stream 107a of fossil coal, previously crushed to an average size of approximately 0.2 to 2 mm, is blown in by means of a series of nozzles 107, cooled and covered externally with refractory.

The gases from the volatile materials present are released in the form of elements ($N_2$, $H_2$, $S_2$) or CO and are removed via ducts 108 forming a current 108a.

The slag formed is removed continuously via ducts 109 and is supplied to the reactors 110 where it meets a current of gas and is desulphurized. In step (II) the desulphurization of the bath is carried out in several reactors containing the molten metal which flows in each of these counter to the current of the slag covering its surface; this slag is formed by the product of the desulphurization reaction and slag-forming agents 111a, for instance lime, added to the molten bath through the nozzles 111, and sulphur and other acid compounds from the ash.

According to the invention the desulphurizing additives are advantageously differentiated in terms of the quality of the desulphurizing agents, the most effective being used in the final stages and the others, less costly than the former, in the initial stages, wherein the slag from the subsequent stages can also be re-used for this purpose after a hot desulphurization treatment.

The movement of the slag on the surface of the bath runs counter to the flow of the bath; for this purpose, the ducts in which the iron bath flows are provided with an inclination in the direction of movement of the slag floating thereon so as to enable the slag to move under the effect of gravity; this inclination is overcome by the metal bath as a result of the use of electromagnetic linear motors 112 or the like.

As an alternative the countercurrent movement of the slag may be achieved by jets or sheets of gas acting on the floating slag in the direction opposite to the direction of flow of the molten metal.

The desulphurization reactor 102 is divided into two or more separate zones 113a and 113b in which the desulphurizing agents are added in different quantities and compositions as discussed above depending on the need for desulphurization and therefore on the type of fossil coal or other fuel used.

The desulphurization treatment is followed by step (III) using a reactor 115 shown diagrammatically in Fig. 5 in which the stream of desulphurized molten metal 105b emerging from step (II) is heat treated.

In order to produce the desired temperature increase, as shown in Fig. 5, the stream of molten metal 105b, entering the heating reactor 115, is divided into two portions 116 and 117, the smaller of which 116 forming, by way of non-limiting example, approximately 12 to 25% of the total, being subjected to complete oxidation while, as it has been brought to a higher level, it is being caused to fall into a free environment where it is struck by jets of oxygen which are advantageously symmetrical with respect to the vertical axis of the falling stream.

Fig. 5 shows a diagram, in section along a vertical line, of the reactor 115 for the heating of the stream 105b of iron containing carbon; an electromagnetic pump 118 or like circulation means brings the portion 117 of the stream of iron designed to be oxidized through a rising duct 119 to a level where it is a few metres higher than the residual stream 117 which is also supplied to the reactor 115 through a respective duct 120 forming a hydraulic external seal for the gas ($CO_2$) generated in the reactor which is removed through the duct 121; the reaction zone 122 is remote from the walls 123 of the reactor which are covered by refractory and thus protected from excessive heat stresses.

The stream 116, at its inlet into the reactor 115, falls vertically and is struck by the jets of oxygen 124 and is thus decarburized; this decarburized stream then rejoins the main stream 117; the overall stream of molten metal 105c, reformed in this way, is removed from the reactor via the duct 125 to be supplied to step (IV).

The fourth step of the method provides the electochemical conversion of the energy, generated by the reaction of the carbon oxidation by oxygen, into electrical power with contemporaneous generation of gas CO.

The oxygen generating the reaction, coming from the air supplied to the cathodic elements in ionic form, is carried through a thin wall of solid electrolyte.

When the oxygen reaches the electrode and touches the solid electrolyte there is an oxygen reduction reaction:
$$O_{(ads)} + 2e \rightarrow O^{=} \qquad 2)$$

The electrical charges are carried through the iron bath to the anode.

This reaction is enabled by the presence of carbon in the bath with which the oxygen in solution reacts:
$$O_{(sol)} + C_{(sol)} \rightarrow CO \qquad 1)$$
giving rise to the emission of CO gas.

The potential energy of the cell E ($E_{rev}$) can be expressed as:
$$E_{rev} = \frac{RT}{4F} \ln \{pO_2 \,(cat) \,/\, pO_2 \,(an)\}$$
wherein $pO_2(an)$ and $pO_2(cat)$ indicate the partial pressure of the oxygen to the anod, i.e. of the oxygen dissolved in the iron, and the one of the same in contact to the cathod respectively. The potential energy, in the chosen conditions, is about 1.16 volt.

In this fourth step of the method the stream of molten metal, at the predetermined temperature of 1570-1750°C, is introduced, possibly divided into several portions, into one or more reactors formed by banks of fuel cells as shown in Figs. 6 and 7.

Each reactor 126 comprises an inlet duct 127 for the molten iron bath following which the bath reaches the banks 129 through several connection ducts 128, each bank comprising a plurality of aligned elementary cells 130.

The iron bath is then discharged from the reactor through the outlet ducts 131, comprising pressure reduction means 132, which converge together in the collector 133 from which the iron bath is brought back to the carburation step (I) with the stream 105 at a temperature which differs little from that at which it is introduced into the reactor while the CO gas is separated to form the gaseous outlet current 134 of the diagram of Fig 1.

As shown in Fig. 7, there are n cells 130 for each bank and m banks 129 in the reactor 126.

The cells 130 each have a cathode 135 which is advantageously but not necessarily of tubular form within which an input air current 136 is supplied.

In order to be able to have both the inlet 136 and the outlet 137 of the air from the tubular cathodes 135 in the upper portion of the reactor so as not to have to place the iron bath under a seal, two adjacent cathodes are connected together close to the bottom of the reactor to form a single U-shaped component.

The tubular cathodes 135, as shown in Fig. 8 , are formed, in a preferred embodiment, by cylindrical bodies with walls having an external layer 138 of thin solid electrolytic material, advantageously between 0.2 and 0.4 mm, supported by a layer 139 of porous material with a thickness of a few millimeters; the electrical supply is provided by an electrode 140 comprising a conductive component of metal type extending in a discontinuous manner so as not to block the current of gas, for example in the form of several sheets parallel to the axis of the tubular cathode placed between the solid electrolyte 138 and its porous support 139; a thin layer, with a thickness in the range of some tens of μm, of a conductive material of porous electronic type forming the actual cathode of the cell, is then placed in contact with the surface of this conductive element and the solid electrolyte.

The conductor 141 for the current supply is then connected to the metal element of the electrode 140.

A plane anode 142 of thin conductive material resistant to high temperatures is provided at the location of each tubular cathode 135 parallel to a generatrix of the outer cylindrical wall of the cathode; the structure of the anode is similar to that described for the electrode of the cathode, comprising a metal element is contact with a thin layer of porous conductive material which is, in turn, in contact with the bath; there may be a single anode for each cathode facing it or there may be an anode common to several cells of a bank. The anode 142 is in any case supported by a plane support wall 143 of non- conductive refractory material which separates the bank of cells from the adjacent bank.

The tubular cathodes 135 of the first bank are connected electrically, via the respective conductors 141, to an external electrical collector 144 and the cathodes of the successive banks are each connected in series to the anode of the adjacent bank by the associated conductors 141; the anodes of the final bank (mth) or the anode common to the cells of the final bank are in turn connected by the conductors 145 to the external electrical collector 146.

The voltage available between the collectors 144 and 146 is then m times greater than the voltage of the individual cell 130 and the current in the collectors 141 and 144 is n times greater than that generated in the individual cell.

The reactors described above are connected together as shown in the diagram of Fig. 1 to form overall a high temperature co-generation plant, i.e. a plant able simultaneously to produce two different forms of energy, specifically electrical energy and CO gas in quantities appropriate for large-scale industrial production.

The method has a very low level of pollution of the surrounding environment since the pollutant substances contained in the fuel, chiefly sulphur, are eliminated in the form of slag; moreover, no gaseous products are emitted into the atmosphere and no nitrogen compounds are present in the reaction with carbon:

$$C + \underline{O} = CO \qquad 1)$$

since only oxygen from the air supplied passes through the electrolyte and reaches the bath in which the reaction takes place.

The method also has low production and plant costs as a result of the use of the same plant to produce both electrical energy and CO as well as the use of air and not oxygen as an oxidant and finally as a result of the high power yield connected with the direct conversion of the energy, wherein it is possible to achieve a specific consumption of carbon per kWh generated which is approximately half of that which can be achieved in thermoelectric plants. $CO_2$ emissions are consequently also considerably reduced as well.

According to the present invention industrial solutions relating to different sectors of energy production can also be provided enabling the achievement of a range of products which may be more complex than those of the co-generation plant, through two variants, the first of which relates to the method of operation of the plant and the second takes the form of a connection with known industrial plants disposed downstream of the high temperature co-generation plant.

The first variant is based on the characteristic feature of the high temperature co-generation plant of the invention on the basis of which it is possible to produce in the heating step a temperature increase in the stream of molten metal which can be equal to or higher than that needed for the stationary operation of the plant as a whole.

In the first case (the amount of heat supplied equals the heat losses) operation of the isothermic type takes place in the subsequent step of direct conversion of the energy; in the second case operation is not isothermic, i.e. there is a greater increase in the temperature of the bath in the heating step, followed by a cooling of the molten metal during the subsequent co-generation conversion.

The two types of operation differ chiefly in respect of the quantity of gas produced while the electrical energy production remains the same, since the quantity of gas produced with isothermic operation is considerably higher than that produced with non-isothermic operation of the co-generation reactor.

By way of example isothermic operation may entail a rate of flow of the stream of molten metal 105 of 1.270 t/h; a supply of fuel 107a formed by fossil coal, with C = 85%, S = 1.5% and a net calorific value of 7,400 Kcal/kg, of 5 8 t/h; an addition of desulphurizing agents 111a of 3.7 t/h and a stream 116 of molten metal subjected to decarburation at a flow rate of 210t/h.

A current 134 of CO of 77,250 $m^3$/h and electrical energy 147 of 100 MWh is produced by the co-generation step.

Non-isothermic operation may entail, for an identical production of electrical energy, a rate of flow of the stream of molten metal 105 of 990 t/h; a supply of fuel 107a formed by fossil coal, with C = 85%, S = 1.5% and a net calorific value of 7,400 Kcal/kg, of 42 t/h; an addition of desulphurizing agents 111a of 2.7 t/h and a stream 116 of molten metal subjected to decarburation at a flow rate of 272 t/h. A current 134 of CO of 46,800 $m^3$/h and electrical energy 128 of 100 MWh is produced by the co-generation stage.

With reference to the industrial solutions which use the high temperature co-generation plant for the purposes of obtaining different products, we shall look firstly at those possibilities arising from the second type of operation.

This is more advantageous when the final product is electrical energy.

The production of a further quantity of electrical energy which is additional with respect to the energy already available in the primary high temperature co-generation plant, is possible by means of the use of the CO gas in a known system for the generation of electrical power which is thus installed downstream of the plant of the present invention.

The known systems which can be most advantageously used for the above purpose are:

    1. thermoelectric plant with a combined gas-vapour cycle;

    2. direct conversion plant using magnetohydrodynamic (MHD) methods;

    3. gas fuel cells.

The advantages of the solutions set out above are:

    a. minimal pollutant effects connected with these plants and due to $NO_x$, particularly as regards solution 2;

    b. higher overall yield from the energy conversion with the same carbon consumption, the yield of known plants (T max = 0.60) being considerably lower than the yield from the co-generation plant (T max = 0.90).

The solutions set out above do not exhaust the possibilities of producing electrical energy by using the CO gas produced by the high temperature co-generation and by means of other products obtained from this gas with the result that other solutions not explicitly listed are possible using the plant and the method of the present invention.

The solutions adapted to obtain gaseous or liquid products (whether or not fuels) as final products which are used in the chemical and/or petrochemical sectors are advantageously obtained with the high temperature co-generation plant generally operating in an isothermic manner at the final conversion stage.

In this case the plant operates predominantly as a gasification plant supplied with air (rather than oxygen) thus enabling a reduction of costs as well as the other advantages mentioned above relating to the yield and the low sulphur content of the products.

Although the sale of the co-generated electrical energy is advantageous given the low cost of production, a new solution is also advantageous in which a plant for the electrolysis of water uses the direct current produced by the plant of the invention according to the diagram of Fig. 9

In this diagram the electrical current 147 is supplied to the electrolysis plant 150 where a stream of water 151 is supplied producing as output a current 152 of $O_2$ and a current 153 of $H_2$.

The hydrogen produced can then be used separately or supplied together with the CO gas to a further plant 154 from which many synthesis products 155 of major industrial interest can be obtained.

The final products which can be obtained from this plant configuration comprising the electrolysis unit 150 and one or more other plants adapted to the conversion of the CO gas with $H_2$ are evident: hydrogen, methanol, petrol, synthetic natural gas (SNG), ammonia.

The plant described above may in fact be used for the production of hydrogen following which the hydrogen can be used for chemical syntheses (for the production of $NH_3$ or the liquefaction of coal and so on); this plant is formed by the steps described above (carburation, desulphurization, heating and direct conversion) preferably operating in an isothermic manner during the conversion step and provided downstream with electrolysis units which use the energy in the form of direct current for the production of hydrogen.

This gas can be further produced from the co-generation gas by the reaction known as the "water shift reaction":

$$CO + H_2O \rightarrow CO_2 + H_2 \quad (4)$$

Among electrolysis units for water use can advantageously be made of an electrolysis unit with solid electrolytes which operates at high temperature.

Many variants can be made without thereby departing from the scope of the invention as shown by its general characteristic features.          .


## Claims

1. A method for the production of electrical energy and gas for chemical syntheses characterized in that it is formed by several successive steps comprising a step in which a fuel containing carbon is supplied to a metal in the molten state, called the carburation stage, a step in which the impurities added by the fuel to the molten metal bath are removed, called the desulphurization stage, a step in which the molten metal bath is heated, a step in which the fuel is converted electrochemically into electrical energy and gas with a medium calorific value, by means of a solid electrolyte, and steps in which the electrical energy and gas produced are used.

2. A method for the production of electrical energy and gas for chemical syntheses as claimed in claim 1, characterized in that the molten metal bath is formed by iron containing carbon in solution.

3. A method for the production of electrical energy and gas for chemical syntheses as claimed in claim 1, characterized in that the material with solid electrolyte properties is constituted by refractory oxides such as $ZrO_2$, $ThO_2$, $HfO_2$, CaO, MgO, $Y_2O_3$, $Yb_2O3$ and the like whether pure or in combination, either as mixed oxides or as impurities.

4. A method for the production of electrical energy and gas for chemical syntheses as claimed in claim 3, characterized in that the material with solid electrolyte properties is formed predominantly by $ZrO_2$.

5. A method for the production of electrical energy and gas for chemical syntheses as claimed in claim 1, characterized in that the solid fuel containing carbon supplied to the bath is formed by fossil coal in small pieces or crushed, inert gas being used as the carrier fluid.

6. A method for the production of electrical energy and gas for chemical syntheses as claimed in claim 5, characterized in that the carrier fluid is preferably formed by carbon monoxide.

7. A method for the production of electrical energy and gas for chemical syntheses as claimed in claim 1, characterized in that air is supplied through the thin wall of material with solid electrolyte properties, although oxygen alone in ion form can be passed at will through this wall.

8. A method for the production of electrical energy and gas for chemical syntheses as claimed in claim 1, characterized in that it is thermally independent.

9. A method for the production of electrical energy and gas for chemical syntheses as claimed in claim 8, characterized in that oxygen is supplied to the molten metal bath to generate, by the combustion of the excess carbon dissolved in the bath, heat adapted to maintain the operating temperature thereby offsetting the dispersion of the system.

10. A method as claimed in claim 1, characterized in that the steps of carburation, desulphurization, heating, conversion and use of the products take place in separate reactors connected in succession.

11. A method as claimed in claim 10, characterized in that the step of supply or carburation and the step of desulphurization are carried out in two or more adjacent reactors through which a stream from the molten metal bath passes, the fuel containing carbon being supplied to the first of these reactors in the direction of flow of the bath and desulphurizing materials being supplied to the second of these reactors, the impurities, chiefly composed of sulphur and ash, contained in the fuel collecting in a slag floating on the surface of the bath in a movement counter to the current of the bath and being discharged externally to the carburation reactor.

12. A method as claimed in claim 11, characterized in that the fuel is a solid broken into fine pieces with an average size of between 0.1 and 3 mm with a rate of flow and speed of supply in relation to the rate of flow and speed of the molten metal bath causing the fuel to dissolve in the bath during the passage of the particles of fuel into the molten metal.

13. A method as claimed in claim 11, characterized in that the molten metal bath has, at the inlet into the first step an amount of residual carbon of no less than 0.6%.

14. A method as claimed in claim 11, characterized in that fluidizing substances, including lime and calcium fluoride, are supplied together with the solid fuel in the carburation stage forming a slag which is continuously removed from the reactor in which this first step of the method takes place.

15. A method as claimed in claim 11, characterized in that the desulphurization step comprises several successive steps during which various desulphurizing substances are supplied, the most efficient of these being supplied during the final steps.

16. A method as claimed in claim 11, characterized in that the step of heating of the molten metal bath comprises the division of the bath into two streams, one of which is subjected to oxidation, by jets of oxygen, of the fuel contained therein before rejoining the other stream.

17. A method as claimed in claim 11, characterized in that it is isothermic, the same amount of heat formed by the heat dispersions being supplied during the stage of heating of the bath.

18. A method as claimed in claim 11, characterized in that it is non-isothermic, wherein an amount of heat greater than that formed by the heat dispersions is supplied during the stage of heating of the bath, causing a cooling of the bath during the conversion stage.

19. Plant for the implementation of the method as claimed in claims 10 to 16, 17 or 18, characterized in that it comprises a carburation reactor and one or more desulphurization reactors disposed adjacent to one another in succession having upper zones containing the separated gases and communicating with one another through their lower zones through which a molten metal bath stream passes, which reactors are provided with nozzles for the supply of fuel and slag-forming and desulphurizing agents, there being provided means for moving the molten metal bath through the reactors and means for moving the surface slag counter to the direction of flow of the bath.

20. Plant as claimed in claim 19, characterized in that the means for moving the molten metal bath are formed by electromagnetic linear motors and the means for moving the slag in the opposite direction are formed by sloping the reactors in the direction opposite to the movement of the molten metal bath and by jets of gas or the like.

21. Plant for the implementation of the method as claimed in claims 10 to 16, 17 or 18, characterized in that the heating stage is carried out in a reactor in which the fraction of the molten metal bath to be subjected to oxidation is brought by associating lifting means such as electromagnetic pumps or the like to a level which is higher than the remainder of the bath flowing through the reactor and is combined therewith by free fall remote from the walls of the reactor, means being provided for the emission of jets of oxygen symmetrically disposed about the falling bath column and adapted to oxidize the fuel in the bath, the reactor having a zone for the collection of the gases generated by the oxidation and means for the evacuation of these gases.

22. Plant for the implementation of the method as claimed in claims 10 to 16, 17 or 18, characterized in that the conversion stage is carried out in one or more reactors disposed downstream of the heating stage, through which the molten metal bath stream passes, comprising one or more cells each comprising an oxidizing gas inlet member having porous walls which are gas permeable, comprising a layer of material with solid electrolyte properties in contact with the molten metal bath, a conductor of electronic type being placed in contact with the layer of solid electrolyte on the side opposite to the metal bath and forming the cathode of the cell, each cell also being provided with a second conductor of electronic type in contact with the metal bath and facing towards the layer of solid electrolyte forming the anode of the cell, the anode and cathode of the cell(s) being connected to an external consumer circuit, means being provided for the continuous admission and discharge of the molten metal bath and means for the separation and emission of the reaction gas.

23. Plant as claimed in claim 22, characterized in that several elementary cells are connected together in parallel, forming a bank of cells.

24. Plant as claimed in claim 23, characterized in that several banks of cells are advantageously provided, the cells of one bank being respectively connected in series with the cells of an adjacent bank of cells, wherein the banks are transversed by separate streams of the molten metal bath, the cathodes of the cells of the bank at one end of the reactor and the anodes of the cells of the bank at the opposite end being respectively connected to an external electrical consumer circuit.

25. A method as claimed in claim 1, characterized in that the gas produced during the conversion stage is carbon monoxide and the use of this gas produced takes the form of a process for the generation of electrical power using this gas, of thermoelectric or magnetohydrodynamic type or with gas fuel cells or similar known processes.

26. A method as claimed in claim 1, characterized in that the gas produced during the conversion stage is carbon monoxide and the stage of use of the electrical energy produced is a water electrolysis process designed to generate hydrogen that, together with the carbon monoxide produced during the conversion stage, is supplied to the utilizing stage of the gas produced,the use of this gas produced takes the form of a chemical synthesis process.

Fig. 1

Fig. 9

Fig. 2

Fig. 3

Fig. 4

Fig. 5

Fig. 6

Fig. 7

Fig. 8